# EUROPEAN PATENT APPLICATION

(11) **EP 4 233 543 A1**
(43) Date of publication of application: **30.08.2023**
(21) Application number: 23158520.9
(22) Date of filing: 24.02.2023
(51) Int. Cl.: A01N 25/00, A01N 25/12, A01N 25/34, A01N 63/10, A01P 9/00

(54) **MOLLUSC BARRIER**

(30) Priority: 25.02.2022 GB 202202608
(71) Applicant: Doff Portland Limited, Nottingham, Nottinghamshire NG15 6DW (GB)
(72) Inventor: Evans, Matthew, Burslem, ST6 2AW (GB)
(74) Representative: Appleyard Lees IP LLP

(57) **Abstract**

Use of a composition as a barrier to molluscs is disclosed. The composition comprises a combustion product or an alkaline material and is in granular form. The granular composition may be effective and long-acting in such a use due to improved weather resistance compared to loose combustion product or alkaline material. A method of producing such a granular composition comprising a combustion product or an alkaline material and a barrier method preventing access to plants by molluscs with said granular composition comprising a combustion product or an alkaline material are also disclosed. A granular composition comprising at least 98 wt% of a combustion product or an alkaline material, wherein at least 98 % of the granules have a size of from 0.5 to 10.0 mm is also disclosed.

## Description

### Field

The present invention relates to the use of compositions for preventing plant damage by molluscs, the composition providing a physical barrier when placed around plants to prevent molluscs approaching the plants, in particular slugs and snails. In particular, the present invention relates to such compositions which are a granulated form of a combustion product and/or an alkaline material.

### Background

Slugs and snails are problematic pests in gardens and agriculture. Although they are unable to fly, they cause extensive damage to plants and, in the case of agriculture, can reduce crop yields significantly.

Several methods of protecting plants from slugs and snails are known. One of the simplest methods is to manually remove the pests from around the plants. This is possible because slugs and snails are often large and slow enough to be easily found and caught. However, manually removing slugs and snails is labour-intensive and only protects plants for a short period of time.

Pesticides can be applied to plants to kill pests that attempt to consume the plants. This can be a convenient method of providing long-term protection to plants. However, when using pesticides it may be necessary to remove dead pests from around the plants, and the pesticide may cause unintended harm to the environment. In the case of plants intended for human or animal consumption, it may be undesirable for pesticide to be present on the plants when harvested and prepared for consumption. Furthermore, pests can develop resistance to pesticides over time.

Pest barriers are also known which do not contain pesticide but which provide long-term efficacy in preventing mollusc damage to plants. For example, paints or copper strips may be applied to barriers surrounding plants in order to prevent slugs and snails from accessing the plants. Such a barrier may be known as a physical barrier to molluscs.

Wood ash has been used in powder form as an effective barrier against slugs and snails. The ash is spread on soil around plants and is also beneficial as a fertiliser. However, wood ash powder is not waterproof and therefore does not function when it is raining (when slugs and snails are most active) and requires reapplication after rainfall. Furthermore, since wood ash powder raises the alkalinity of soil, it is not suitable for acid loving plants such as potatoes, hydrangeas, rhododendrons, azaleas, tulips, and junipers.

There is a need for improved methods of creating barriers to pests such as slugs and snails.

### Summary of the Invention

It is one aim of the present invention, amongst others, to provide a method of creating a physical barrier to molluscs that addresses at least one disadvantage of the prior art, whether identified here or elsewhere, or to provide an alternative to existing barrier products for molluscs. For instance it may be an aim of the present invention to provide an effective barrier to molluscs which provides a long-term barrier effect.

According to aspects of the present invention, there is provided a use and method as set forth in the appended claims. Other features of the invention will be apparent from the dependent claims, and the description which follows.

According to a first aspect of the present invention, there is provided a use of a composition comprising a combustion product for forming a barrier to molluscs, wherein the composition is in the form of granules.

The inventors have found that using combustion products, such as ash, in a granulated form provides a barrier effect on molluscs such as slugs and snails while advantageously being weather-resistant. In particular, the granules remain effective when wet and they are not susceptible to being blown away by wind. Furthermore, the granules are efficient to manufacture.

The composition used in this first aspect may be referred to as a granular composition of a combustion product.

The combustion product is a solid material which remains after the burning of a feedstock material. The burning of the feedstock material may be carried out primarily to generate energy and the combustion product may therefore be a by-product of this process and/or an unwanted waste material. It is believed that any suitable combustion product, for example in the form or an ash or a powder, can be used in the present invention to provide the granules for use as an effective barrier to molluscs. The combustion product may be the product or by-product of the incineration of a waste material, for example ash from the incineration of poultry litter.

In some embodiments, the combustion product may be the product of the incineration of rendered animal waste material, which may be referred to as incinerated rendered animal waste material.

The combustion product suitably has an alkaline pH. Therefore the combustion product may be referred to as an alkaline combustion product. The combustion product may be selected from incinerated poultry litter or lime.

The ash may comprise compounds of calcium, iron, silicon, aluminium, and/or magnesium, such as calcium oxide, calcium carbonate, iron oxide, silicone dioxide, aluminium oxide, and/or magnesium oxide.

Incinerated poultry litter is produced by burning poultry litter which is a mixture of poultry manure and bedding material (such as straw) produced in a poultry farm during the raising of poultry. This waste product may be burnt to provide energy which results in the incinerated poultry litter as a by-product. For example, suitable incinerated poultry litter products may be obtained from Fibrophos^{™} (CAS number: 68131-74-8). Suitable incinerated poultry litter may be in the form of ash. The incinerated poultry litter suitably comprises potassium chloride, calcium oxide, magnesium oxide and sodium oxide.

Incinerated rendered animal waste material is produced by burning a mixture produced by the rendering of animal waste material, for example animal carcasses. Such a rendered animal waste material suitably contains pentacalcium hydroxide tris(orthophosphate). Therefore the combustion product may be the product of incineration of a waste material comprising pentacalcium hydroxide tris(orthophosphate) (CAS number: 12167-74-7, EC / List no.: 235-330-6, molecular formula: Ca₅(OH)(PO₄)₃). Suitably the waste material comprises at least 50 wt% pentacalcium hydroxide tris(orthophosphate), at least 60 wt% or at least 70 wt% of pentacalcium hydroxide tris(orthophosphate).

The combustion product may be selected from incinerated poultry litter, incinerated rendered animal waste (or a waste material comprising pentacalcium hydroxide tris(orthophosphate) or lime.

The inventors have also found that lime, produced from the calcination of limestone at high temperature (for example in a lime kiln) and having an alkaline pH can be formed into granules for use in forming a barrier to molluscs as described herein.

The first aspect of the present invention may additionally or alternatively provide the use of a composition comprising an alkaline material for forming a barrier to molluscs, wherein the composition is in the form of granules. The alkaline material is suitably a powder or an ash which has been granulated to provide the granules. The alkaline material suitably has a pH of at least 8, suitably at least 9, suitably at least 10 or at least 11. The alkaline material suitably retains said pH after granulation. Therefore the granular composition comprising the alkaline material suitably has said pH. The alkaline material may be lime.

Suitably in use the composition in the form of granules does not become integrated into the soil, due to the structural integrity of the granules. Therefore the composition does not affect the pH of the soil in use, despite having an alkaline pH in some embodiments.

The combustion product and/or an alkaline material is suitably present in the granular composition in an amount of greater than 80 wt%, suitably greater than 90 wt%, for example greater than 98 wt% or 99 wt% based on the total weight of the granular composition.

The granular composition comprising the combustion product and/or an alkaline material may comprise some water. The granular composition may have a moisture content (i.e. water content) of less than 10 wt%, suitably less than 5 wt%, for example less than 2 wt% or less than 1 wt% based on the total weight of the granular composition. Suitably the granular composition comprises less than 0.5 wt% water, suitably less than 0.1 wt% water. Suitably the granular composition is substantially free of water.

The granular composition may consist essentially or consist of the combustion product and/or an alkaline material and optionally water. In other words, the granular composition may consist essentially or consist of the combustion product and/or an alkaline material and water, or the granular composition may consist essentially or consist of the combustion product and/or an alkaline material.

The inventors have surprisingly found that such a granular composition consisting essentially of or consisting of the combustion product and/or an alkaline material and water can be formed using the methods described herein without a binder or filler material being present, and that such a granular composition is weather resistant and provides efficacious mollusc barrier properties over a long period of time.

Suitably, the granular composition is substantially free from heavy metals, such as chromium, cobalt, nickel, copper, zinc, arsenic, selenium, silver, cadmium, antimony, mercury, thallium, and lead. By "substantially free" we mean that heavy metals, if present, are only present in trace amounts, such as less than 100 ppm, suitably less than 10 ppm or less than 1 ppm. The granular composition may be completely free from heavy metals.

Suitably, the granular composition is substantially free from pesticides. By "substantially free" we mean that pesticides, if present, are only present in trace amounts, such as less than 100 ppm, suitably less than 10 ppm or less than 1 ppm. The granular composition may be completely free from pesticides.

Suitably the granular composition is substantially free from heavy metals and from pesticides, suitably completely free from heavy metals and pesticides.

The inventors have found that the granular compositions comprising the above-described combustion products or alkaline materials are effective barriers to molluscs such as slugs and snails even if they do not contain toxic substances such as heavy metals or pesticides. Therefore, the use of these toxic substances can advantageously be avoided.

The composition is in the form of granules. Suitably at least 98% of the granules have a size of at least 0.5 mm. Suitably at least 98% of the granules have a size of at least 1.0 mm. For example, at least 98% of the granules may have a size of at least 1.5 mm.

Suitably at least 98% of the granules have a size of up to 10.0 mm. Suitably at least 98% of the granules have a size of up to 7.5 mm. For example, at least 98% of the granules may have a size of up to 5.0 mm.

Suitably at least 98% of the granules have a size of from 0.5 to 10.0 mm. Suitably at least 98% of the granules have a size of from 1.0 to 7.5 mm. For example, at least 98% of the granules may have a size of from 1.5 to 5.0 mm.

For the avoidance of doubt, the size of a granule is the largest dimension of the granule, i.e. the length of the granule. For example, where a granule has a length of 2 mm, a width of 1 mm and a depth of 1 mm, the size of the granule is defined as 2 mm.

Suitably the size of the granules is determined by sieve methods known in the art.

Suitably the granules are substantially spherical in shape. Therefore the size of the granules referred to above is suitably the diameter of the substantially spherical granules.

The granules suitably have a bulk density of from 0.8 to 1.2 kg/L, such as from 0.9 to 1.1 kg/L. Suitably, the granules have a bulk density of 1.0 kg/L.

The granules of the composition comprising the combustion product and/or an alkaline material may be referred to as prills.

This first aspect provides the use of a granular composition of a combustion product and/or an alkaline material as an effective barrier to molluscs. The molluscs suitably include gastropods, such as slugs and snails.

Suitably the granular composition is used for preventing molluscs from accessing a target. The target is suitably a plant, such as a garden plant or a crop. The granular composition is suitably arranged on the ground, for example on soil. The granular composition may be arranged to be contacting the target or within 1 metre of the target.

The granular composition suitably prevents at least 50% of molluscs from passing through or over the composition when the composition is laid on the ground. Suitably the granular composition prevents at least 75% of molluscs from passing through or over the composition, for example at least 90%.

The granular composition may therefore be used as a barrier to molluscs. By "barrier", we mean that the composition is arranged (such as on the ground) so that the molluscs are excluded from a predetermined area - i.e. an area separated from the molluscs by the barrier. The granular composition is suitably arranged so that molluscs cannot enter said predetermined area without contacting the composition. For example, the granules of the composition may be arranged so that the granules are in contact with one another. Said predetermined area suitably comprises a plant to be protected from molluscs. The granular composition may be arranged to form a closed shape. Said closed shape suitably surrounds a predetermined area from which molluscs are to be excluded.

The granular composition may be arranged to surround the target, for example surrounding the stem or stems of a plant. Suitably the granules of the composition are arranged in contact with each other, surrounding a plant. Suitably the amount of the granular composition used for each plant is sufficient to form a complete barrier of the composition around the plant, suitably around the stem of the plant. Suitably at least 10 g of the granular composition is used for each plant, suitably at least 15 g or at least 20 g. For example, approximately 25 g of the granular composition may be used for each plant. Suitably less than 50 g of the granular composition is used per plant, suitably less than 40 g or less than 30 g of the granular composition.

The granular composition may be manufactured by any suitable method. The granular composition is suitably manufactured by granulation.

According to a second aspect of the present invention, there is provided a method of making a granular composition of a combustion product, the method comprising the steps of:
a) admixing a combustion product and water;
b) granulating the admixture obtained in step a) to provide granules of the combustion product and water; and
c) drying the granules of the combustion product and water to provide the granular composition of the combustion product.

The combustion product may be as defined in relation to the first aspect.

The granular composition of the combustion product may have any of the suitable features and advantages described in relation to the first aspect.

The combustion product may be replaced with an alkaline material as defined above, in the method of this second aspect.

The steps of the method of this second aspect are suitably carried out in the order step a) followed by step b) followed by step c).

The granulation method may comprise adding a dry combustion product or alkaline material, such as incinerated poultry litter or lime, into a granulator followed by adding water to the granulator. The granulator is suitably a drum granulator. The amount of water added may be from 10 to 30 wt%, such as from 15 to 25 wt%, for example 20 wt% based on the total weight of the water and the dry combustion product or alkaline material.

In step b) of the method, the granulator may be run at a drum speed of from 10 to 60 rpm, such as from 15 to 50 rpm, for example from 25 to 40 rpm. The granulator is suitably run until at least 90 wt%, such as at least 95 wt%, for example 100 wt% of the dry components are in the form of granules.

Suitably step b) is adapted to provide granules having the shape and dimensions described above in relation to the first aspect, for example by adjusting the drum rotation speed and/or temperature of the granulation process and/or the speed of addition of the water.

Following granulation, the granules are suitably dried in step c). The granules may be dried at a temperature of from 5 to 80°C, such as from 10 to 60°C, for example from 15 to 40°C. The granules may be dried for a period of from 1 to 48 hours, such as from 6 to 42 hours, for example from 18 to 32 hours. The granules may be dried on the ground (e.g. on a hard surface, either outdoors or indoors) or may be dried using drying equipment. Suitable drying equipment may comprise a rotating drum or a flat-bed conveyor.

Alternatively, the granules may be dried at a relatively high temperature. For example, the granules may be dried at a temperature of at least 100°C, suitably at least 130°C or at least 150°C. Suitably the granules are dried at a temperature of from 150 to 200°C. In such embodiments of the drying step, the granules are suitably dried for at least 1 minute, for example from 1 to 30 minutes or from 5 to 20 minutes, at such temperatures.

Suitably step c) is carried out until the granular composition of the combustion product and/or alkaline material comprises less than 5 wt% water, suitably less than 2 wt% or less than 1 wt% water based on the total weight of the granular composition. Step c) may be carried until the granular composition comprises less than 0.5 wt% water, suitably less than 0.1 wt% water. Suitably the granular composition is substantially free of water.

In some embodiments, step c) is carried out until the granular composition of the combustion product and/or alkaline material comprises from 1 to 5 wt% water, suitably from 1 to 3 wt% water.

The method of this second aspect may comprise a step d) of curing the granular composition. Suitably step d) is carried out after step c). Suitably step d) increases the hardness of the granules of the granular composition. Step d) may be carried out at ambient temperature, suitably for at least 1 day or at least 5 days. Step d) may be carried out after packaging the granular composition into a suitable container or package, and before use of the granular composition.

Suitably the granular composition of the combustion product and/or an alkaline material produced by the method of this second aspect consists essentially or consists of the combustion product and/or an alkaline material and water. Suitably the granular composition of the combustion product and/or an alkaline material produced by the method of this second aspect consists essentially or consists of the combustion product and/or an alkaline material, suitably incinerated poultry litter or lime.

According to a third aspect of the present invention, there is provided a granular composition comprising at least 98 wt% of a combustion product, wherein at least 98 % of the granules have a size of from 0.5 to 10.0 mm.

The granular composition comprising the combustion product may have any of the suitable features and advantages described in relation to the first aspect.

In some embodiments, the granular composition comprises at least 98 wt% incinerated poultry litter.

In some embodiments, the granular composition comprises at least 98 wt% lime.

The combustion product may be replaced with an alkaline material as defined above, in the granular composition of this third aspect.

According to a fourth aspect of the present invention, there is provided a method of preventing molluscs from accessing a target, the method comprising arranging a composition comprising a combustion product and/or an alkaline material around a target to be protected from molluscs, wherein the composition comprising the combustion product and/or an alkaline material is in the form of granules.

The suitable features of the molluscs, the composition, the granules, the arrangement of the composition and the granules, and the target of this second aspect are as defined above in relation to the first aspect. The advantages of the composition and granules are as described above. Suitably the target is a plant.

The invention will now be described with reference to the following non-limiting examples.

### Examples

### Example 1

### Granulation process

A drum granulator (from Ehrich) was loaded with ash and the drum was started at 10 rpm. Water was slowly added to the drum until the water made up 20 wt% of the material within the drum so as to avoid pooling of water in the drum. After addition of the water, the drum speed was increased to approximately 30 rpm. The speed was then adjusted as required until granules of ash started to form.

The granulator was run for 5 minutes until all the ash was granulated. At this stage the granules of ash were soft and had a moisture content of 20 wt%. It is believed that a cementation reaction takes places during this process to provide the granules.

### Drying process

The granules of ash were spread on the ground and allowed to dry naturally for 24 hours.

The finished granules had a bulk density of 1 kg/L. 98% of the granules had a size of from 1.5 to 5.0 mm after this drying step.

### Example 2

### Efficacy test

Arena plots were used to test the efficacy of the granular ash composition and comparative barrier products in preventing plant damage from slugs.

The comparative barrier products were the known commercially available products "Fito Slug Barrier Granules" and "Efofective Slug Defence" which are based on clay materials, and the alternative wool barrier materials "STC Slugs Away wool mat" and "Doff wool pellets". The granular composition of Example 1 was compared to these materials in this efficacy test.

Each arena plot contained 20 transplanted bok choi plants at the 2 leaf stage. Each arena plot contained a barrier product arranged around the plants, apart from one arena plot which contained no barrier product as a control.

10 slugs were introduced to each arena plot. The arena plots were caged to prevent the slugs from escaping. Feeding damage to the plants from the slugs was observed over a period of 14 days. No slugs showed detrimental health effects. The results are shown in Table 1 in terms of percentage of plants damaged.

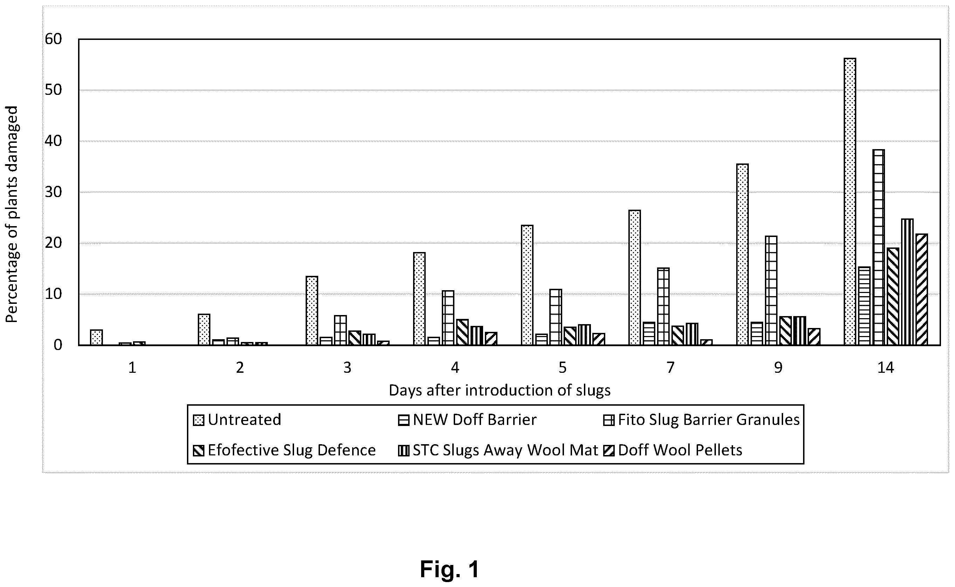

Figure 1 shows the results in a bar chart. Example 1 is referred to as NEW Doff Barrier in Figure 1.

**Table 1**

| **Number of days after slugs introduced** | **Percentage of plants damaged (%)** | | | | | |
|---|---|---|---|---|---|---|
| | **No barrier product** | **Granules of Example 1** | **Fito Slug Barrier Granules** | **Efofective Slug Defence** | **STC Slugs Away Wool mat** | **Doff Wool Pellets** |
| 1 | 3 | 0 | 0.38 | 0.63 | 0 | 0 |
| 2 | 6 | 1.03 | 1.38 | 0.5 | 0.5 | 0 |
| 3 | 13.5 | 1.5 | 5.75 | 2.75 | 2.13 | 0.75 |
| 4 | 18.13 | 1.5 | 10.63 | 5 | 3.63 | 2.5 |
| 5 | 23.5 | 2.13 | 10.88 | 3.5 | 4 | 2.25 |
| 7 | 26.38 | 4.5 | 15.13 | 3.75 | 4.25 | 1 |
| 9 | 35.5 | 4.5 | 21.38 | 5.5 | 5.5 | 3.25 |
| 14 | 56.25 | 15.25 | 38.25 | 19 | 24.75 | 21.75 |

The results show that the granules of Example 1 were effective in preventing damage to the plants from the slugs. The granules of Example 1 also showed efficacy which was superior to the comparative barrier products.

In summary, the present invention provides the use of a granular composition comprising a combustion product or an alkaline material as an effective barrier to molluscs. The granular composition may be effective and long acting in such a use due to improved weather resistance compared to loose combustions products / alkaline materials. The present invention also provides a method of producing such a granular composition comprising a combustion product or alkaline material and a barrier method of preventing access to plants by molluscs with said granular composition.

Although a few preferred embodiments have been shown and described, it will be appreciated by those skilled in the art that various changes and modifications might be made without departing from the scope of the invention, as defined in the appended claims.

As used in the specification and the appended claims, the singular forms "a", "an," and "the" include both singular and plural referents unless the context clearly dictates otherwise. By way of example, "a target" means one target or more than one target.

Throughout this specification, the term "comprising" or "comprises" means including the component(s) specified but not to the exclusion of the presence of other components. The term "consisting essentially of' or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of' means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, where amounts of components in a composition are described in wt%, this means the weight percentage of the specified component in relation to the whole composition referred to. For example, "ash is present in the composition in an amount of greater than 80 wt%," means that greater than 80 wt% of the composition is provided by ash.

As used herein, unless otherwise expressly specified, all numbers such as those expressing values, ranges, amounts of percentages may be read as if prefaced by the word "about", even if the term does not expressly appear.

The term "about" as used herein when referring to a measurable value such as a parameter, an amount, a temporal duration, and the like, indicate that a value includes the standard deviation of error for the device or method being employed to determine the value. The term "about" is meant to encompass variations of +/-10% or less, +/-5% or less, or +/-0.1 % or less of and from the specified value, insofar such variations are appropriate to perform in the disclosure. It is to be understood that the value to which the modifier "about" refers is itself also specifically disclosed.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims), and/or all of the steps of any method or process so disclosed, may be combined in any combination, except combinations where at least some of such features and/or steps are mutually exclusive.

Each feature disclosed in this specification (including any accompanying claims) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims), or to any novel one, or any novel combination, of the steps of any method or process so disclosed.

## Claims

1. Use of a composition comprising a combustion product or an alkaline material for forming a barrier to molluscs, wherein the composition is in the form of granules.

2. Use of a composition comprising an alkaline material for forming a barrier to molluscs, wherein the composition is in the form of granules.

3. The use of claim 1, wherein the combustion product is incinerated poultry litter or incinerated rendered animal waste.

4. The use of claim 1, wherein the combustion product is lime.

5. The use of any preceding claim, wherein the combustion product and/or alkaline material is present in the composition in an amount of greater than 80 wt% based on the total weight of the composition.

6. The use of any preceding claim, wherein the composition is substantially free from heavy metals and preferably substantially free from pesticides.

7. The use of any preceding claim, wherein the composition consists of the combustion product and/or the alkaline material and optionally water.

8. The use of any preceding claim, wherein at least 98% of the granules have a size of from 0.5 to 10.0 mm and preferably wherein the granules have a bulk density of from 0.8 to 1.2 kg/L.

9. The use of any preceding claim, wherein the composition is used for preventing molluscs from accessing a target, wherein the target is a plant, preferably wherein the composition is arranged to be contacting or within 1 metre of the target.

10. The use of any preceding claim, wherein the composition is used as a barrier to molluscs.

11. The use of claim 9 or claim 10, wherein the granules of the composition are arranged so that the granules are in contact with one another, preferably wherein the composition is arranged to form a closed shape.

12. A method of preventing molluscs from accessing plants, the method comprising arranging a composition comprising a combustion product and/or an alkaline material around a target to be protected from molluscs, wherein the composition comprising the combustion product and/or an alkaline material is in the form of granules.

13. A method of making a granular composition of a combustion product and/or an alkaline material, the method comprising the steps of:
a) admixing a combustion product and/or an alkaline material with water;
b) granulating the admixture obtained in step a) to provide granules of the combustion product and/or an alkaline material and water; and
c) drying the granules of the combustion product and/or an alkaline material and water to provide the granular composition of the combustion product and/or alkaline material.

14. A granular composition comprising at least 98 wt% of a combustion product, wherein at least 98 % of the granules have a size of from 0.5 to 10.0 mm.

15. A granular composition comprising at least 98 wt% of an alkaline material, wherein at least 98 % of the granules have a size of from 0.5 to 10.0 mm.
